# EUROPÄISCHE PATENTSCHRIFT

(11) **EP 1 502 821 B1**
(45) Veröffentlichungstag und Bekanntmachung des Hinweises auf die Patenterteilung: **12.05.2010**
(21) Anmeldenummer: 04013812.5
(22) Anmeldetag: 11.06.2004
(51) Int. Cl.: B60R 16/02, H02G 3/04

(54) **Kabelschacht für Leistungskabel**
Cable conduit for feeding cable
Conduite pour câble de puissance

(30) Priorität: 30.07.2003 DE 10335202
(43) Veröffentlichungstag der Anmeldung: 02.02.2005
(73) Patentinhaber: Auto Kabel Managementgesellschaft mbH, 79688 Hausen i.W. (DE)
(72) Erfinder: Dlugokinski, York, 85614 Eglharting (DE); Ecker, Wolfgang, 87386 Oberhausen (DE)
(74) Vertreter: Cohausz & Florack

(56) Entgegenhaltungen:
- EP-A- 0 235 924
- EP-A- 0 900 698
- DE-A- 4 414 662
- GB-A- 2 379 479

## Beschreibung

Die Erfindung betrifft eine Kabelführung für Kabel in Verbrennungsmotoren, mit einem einen Generator mit einem Anlasser verbindenden Kabel, wobei das Kabel durch die Kabelführung vom Generator seitlich entlang eines ein Kurbelgehäuse und/oder einen Zylinderkopf aufweisenden Triebswerks zumindest teilweise zum Anlasser geführt ist. Darüber hinaus betrifft die Erfindung ein Verfahren zur Herstellung einer Kabelführung für Kabel in Verbrennungsmotoren, bei welchem die Kabelführung ein einen Generator mit einem Anlasser verbindendes Kabel führt.

Heutzutage ist die Elektrik in Verbrennungsmotoren ebenso wichtig wie die Technik der Motoren selber. Kabel im Motorraum müssen bei der Herstellung der Motoren verlegt werden. Hierzu ist bekannt, dass Kabel in Kunststoffwellrohren verlegt werden. Außerdem können die Kabel direkt im Motorraum verlegt werden und mit Hilfe von Kabelschellen befestigt werden.

Kunststoffwellrohre sind beispielsweise aus der DE 100 48 396 Al bekannt. Hieraus ist ein Kunststoffwellrohr mit einem Rohrkörper sowie mit Wellungen an dem Rohrkörper bekannt. Das Wellrohr lässt sich an die Gegebenheiten im Motorraum bei der Montage anpassen. Es wird mit Hilfe von Montageclips am Motor befestigt. Um nun die Befestigung des Kunststoffwellrohres leichter handhabbar zu machen, wird vorgeschlagen, eine Festlegungsgeometrie auswärts von der Längsachse des Rohrkörpers vorzusehen. Die Festlegungsgeometrie weist eine Struktur auf, die durch Öffnungen und Bohrungen die Festlegung der Geometrie des Kunststoffrohres an den Motorraum ermöglicht. Mit Hilfe der Aussparungen und Bohrungen kann das Kunststoffwellrohr in beliebiger Form an Gegenständen angeordnet werden. Die Bohrungen dienen dann dazu, mit Hilfe von Schrauben und Befestigungsclips das Kunststoffrohr an dem jeweiligen Gegenstand zu befestigen.

Bei der Montage in einem Motor bedeutet dies, dass das Kunststoffwellrohr an die Gegebenheiten im Motorraum angepasst werden kann und dann im Motorraum befestigt wird. Ein Fädeln des Kunststoffrohres durch den Motorraum ist dabei immer noch notwendig. Die Handhabung und Befestigung des Kunststoffrohres ist aufwändig und erfordert ein gewisses Maß an handwerklichem Geschick.

Aufgrund dieser Nachteile liegt der Erfindung die Aufgabe zugrunde, eine Kabelführung zur Verfügung zu stellen, die schnell und einfach im Motorraum eines Verbrennungsmotors angeordnet werden kann. Ferner soll die Kabelführung kostengünstig in der Herstellung und Verarbeitung sein.

Zur Lösung dieser aus dem Stand der Technik hergeleiteten und zuvor aufgezeigten Aufgabe schlägt die Erfindung vor, dass die Kabelführung als ein im Wesentlichen formstabiler Kabelschacht gebildet ist.

Dadurch, dass der Kabelschacht formstabil ist, kann er bei seiner Herstellung bereits an die Gegebenheiten im Motorraum angepasst werden. Vorzugsweise wird das zu führende Kabel vom Generator zum Anlasser geführt. Dabei wird es ausgehend vom Generator am Spannhebel für den Riemenspanner vorbei in Richtung der Aussenkante des Triebwerks geführt. Danach ist der Kabelschacht parallel zur Seitenwand des Triebwerks geführt und weist am Ende eine Biegung entlang der Wasserpumpe in Richtung des Anlassers auf. Je nach Form des zu bestückenden Motors, kann die Kabelführung auch leicht variieren, jedoch wird die Führung entlang der Seitenwand des Triebwerks bevorzugt. Dadurch, dass der Kabelschacht formstabil gebildet ist, lässt er sich leicht in den Motorraum einbauen. Die Kabel sind vorzugsweise bereits im Kabelschacht eingelassen. Ein Einfädeln der Kabel in Befestigungsclips entfällt. Die Montage ist einfach. Die Herstellung des Kabelschachts ist kostengünstig. Lohnkosten für die Installation der Kabel werden reduziert, da der Zeitaufwand zur Installation des Kabelschachts gering ist.

Es wird bevorzugt, dass der Kabelschacht zumindest zwei am seitlichen Kurbelgehäuse und/oder Zylinderkopf und/oder Ventildeckel angeordnete, den Kabelschacht am Kurbelgehäuse und/oder Zylinderkopf und/oder Ventildeckel fixierende Befestigungsbuchsen aufweist. Die Befestigungsbuchsen können Aussparungen, Bohrungen oder Clips enthalten, mit denen eine Befestigung am Triebwerk möglich ist. Durch die Befestigung am Triebwerk ist der sichere Halt des Kabelschachts im Motorraum gewährleistet.

Gemäß Anspruch 3 wird vorgeschlagen, dass der Kabelschacht an einem Spannhebel eines Riemenspanners angeordnet ist und den Kabelschacht am Spannhebel des Riemenspanners fixierende Befestigungsbuchsen aufweist. Ferner wird gemäß Anspruch 4 vorgeschlagen, dass der Kabelschacht eine an einer Wasserpumpe angeordnete, den Kabelschacht an der Wasserpumpe fixierende Befestigungsbuchse aufweist. Die Befestigungsbuchsen sind vorzugsweise gemäß Anspruch 5 gestaltet. Die weitere Befestigung am Riemenspanner und an der Wasserpumpe erhöhen die Fixierung des Kabelschachts im Motorraum. Bewegungen und Verschiebungen des Kabelschachtes können so besser vermieden werden.

Die Befestigung mit Hilfe von Schrauben und Nuten ist dadurch gewährleistet, dass die Befestigungsbuchsen vorzugsweise als Bohrungen gebildet sind. Das einfache Anklemmen der Befestigungsbuchsen wird dadurch gewährleistet, dass die Befestigungsbuchsen bevorzugt als Befestigungsclips gebildet sind.

Im Motorraum treten Vibrationen auf, die die Befestigung zwischen Kabelschacht und Motorelementen lösen könnten. Daher wird vorgeschlagen, dass die Befestigungsbuchsen zumindest teilweise aus Bronze gebildet sind. Insbesondere wird vorgeschlagen, dass der Innendurchmesser oder auch Unterlegschreiben der Bohrungen aus Bronze gebildet ist. Dadurch wird gewährleistet, dass Schwingungen gedämpft werden.

Vorzugsweise wird der Kabelschacht als Spritzgussteil geformt. Dies ermöglicht eine kostengünstige Herstellung des Kabelschachts.

Da insbesondere im Motorraum hohe Temperaturen auftreten und die Sicherheit im Fahrzeug sehr wichtig ist, wird vorgeschlagen, dass der Kabelschacht eine erhöhte Temperaturfestigkeit aufweist. Hierbei wird vorzugsweise ein PA 66 Kunststoff bzw. ein GF 15- GF 30 Kunststoff verwendet. Diese Kunststoffe weisen die geforderte Temperaturfestigkeit auf und sind ebenfalls formstabil.

Um die Kosten für die Kabelverlegung weiter zu reduzieren, kann neben dem zwischen Generator und Anlasser verlaufenden Leistungskabel zumindest ein weiteres Kabel im Kabelschacht geführt werden. Es wird vorgeschlagen, dass vorzugsweise ein Klimakompressoranschlusskabel, ein Klemme 50 Kabel und/oder eine BSD Steuerleitung für den Generator im Kabelschacht geführt sind. Diese Kabel mit einem geringeren Querschnitt als das Leistungskabel lassen sich ebenfalls im Kabelschacht verlegen und können dann kostengünstig im Motorraum eingebaut werden. Ein Fädeln der Kabel ist nicht mehr erforderlich.

Vorzugsweise wird der Kabelschacht als U-Profil zur Aufnahme der Kabel gebildet. Ein Verschlusselement ermöglicht das Verschließen des Kabelschachts. Dieses Verschlusselement kann auf der Oberseite des U-Profils angeordnet sein. Es kann mit Hilfe von Clipverbindungen oder Steckverbindungen am U-Profil befestig werden. Das Verschlusselement lässt sich vorzugsweise auch öffnen, um nachträglich Kabel auszutauschen oder weitere Kabel in den Kabelschacht einfügen zu können. Auch kann das U-Profil doppelt gebildet sein. Dann verlaufen im Kabelschacht zwei, durch eine Trennwand getrennte Schächte, in die jeweils Kabel verlegt werden können. Dies erhöht die Sicherheit des Kabelschachts.

Eine Austrittsöffnung nach Anspruch 11 ermöglicht den problemlosen Anschluss eines Wellrohres an den Kabelschacht.

Ein weiterer Gegenstand der Erfindung ist ein Verfahren zur Herstellung einer Kabelführung für Kabel in Verbrennungsmotoren, bei welchem ein einen Generator mit einem Anlasser verbindendes und vom Generator seitlich entlang eines ein Kurbelgehäuse und/oder einen Zylinderkopf aufweisenden Triebwerks zumindest teilweise zum Anlasser geführtes Kabel in einem im Wesentlichen formstabilen Kabelschacht konfektioniert wird und bei welchem der konfektionierte Kabelschacht am Kurbelgehäuse und/oder am Zylinderkopf und/oder Ventildeckel befestigt wird.

Das Verfahren ermöglicht das Vorkonfektionieren der Kabelführung. Dadurch werden die Kosten für die Verlegung des Kabels reduziert.

Die Erfindung wird nachfolgend anhand einer ein Ausführungsbeispiel zeigenden Zeichnungen näher erläutert. In der Zeichnung zeigt:
- Fig. 1: eine Ansicht eines Kabelschachts;
- Fig. 2: eine weitere Ansicht eines Kabelschachts ohne Verschlusselement;
- Fig. 3: eine Ansicht eines Verlaufs eines Kabelschachts im Motorraum;
- Fig. 4: eine weitere Ansicht eines Verlaufs eines Kabelschachts in einem Motorraum.

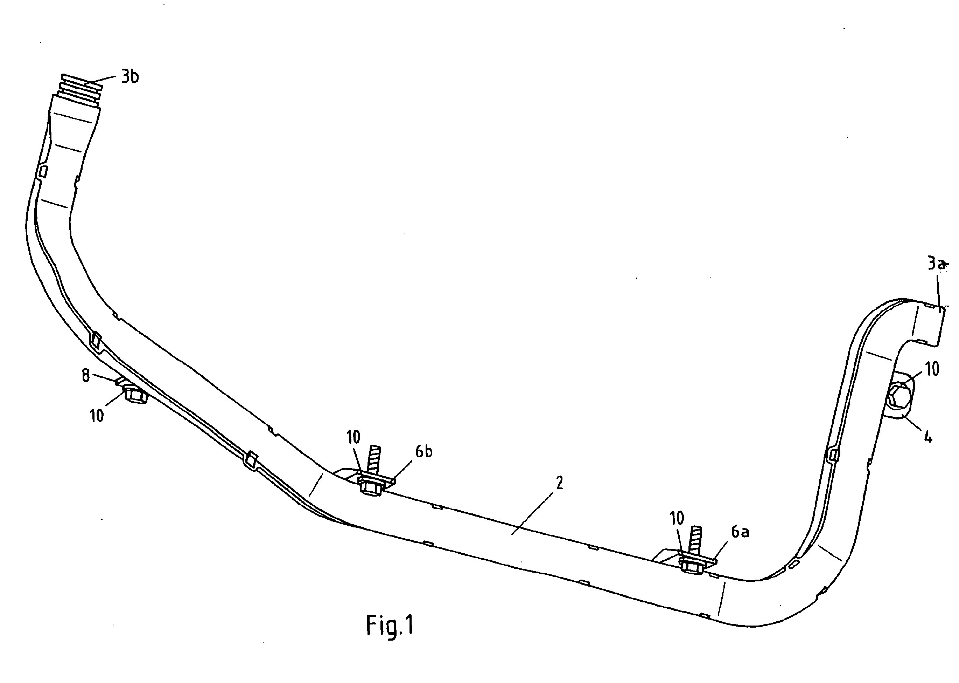

In Figur 1 dargestellt ist eine Ansicht eines Kabelschachts 2. Der Kabelschacht 2 ist im Spritzgussverfahren hergestellt und bereits an die Eorm des Kabelverlaufs im Motorraum angepasst. Am ersten Ende des Kabelschachts 2 ist eine Befestigungsbuchse 4 angeordnet. Diese Befestigungsbuchse 4 dient der Befestigung des Kabelschachts am Spannhebel des Riemenspanners des Motors.

Im weiteren Verlauf des Kabelschachts 2 sind die Befestigungsbuchsen 6a und 6b angeordnet. Diese Befestigungsbuchsen 6a und 6b ermöglichen die Befestigung des Kabelschachts 2 am Triebwerk. Hier insbesondere am Zylinderkopf 12, am Kurbelgehäuse oder am ventildeckel 13. Da das Kabel vorzugsweise an der Seitenwand des Triebwerks vorbei geführt wird, sind diese Befestigungsbuchsen 6a und 6b bevorzugt an den gezeigten Stellen angeordnet.

Im weiteren Verlauf des Kabelschachts 2 ist die Befestigungsbuchse 8 angeordnet. Die Befestigungsbuchse 8 dient der Befestigung des Kabelschachts 2 an einer Wasserpumpe bzw. am Gehäuse einer Wasserpumpe des Motors. Zu erkennen ist, dass die Befestigungsbuchsen 4, 6, 8 an ihren Innendurchmessern Unterlegscheiben 10 aufweisen. Diese Unterlegscheiben 10 dienen der Schwingungsdämpfung und sind deshalb vorzugsweise aus einem weichen Metall oder einer Metall-Legierung, insbesondere Bronze, gebildet.

Der Kabelschacht 2 ist an seinen Enden derart geformt, dass Austrittsöffnungen 3a, b eine an Wellrohre angepasste Passform aufweisen.

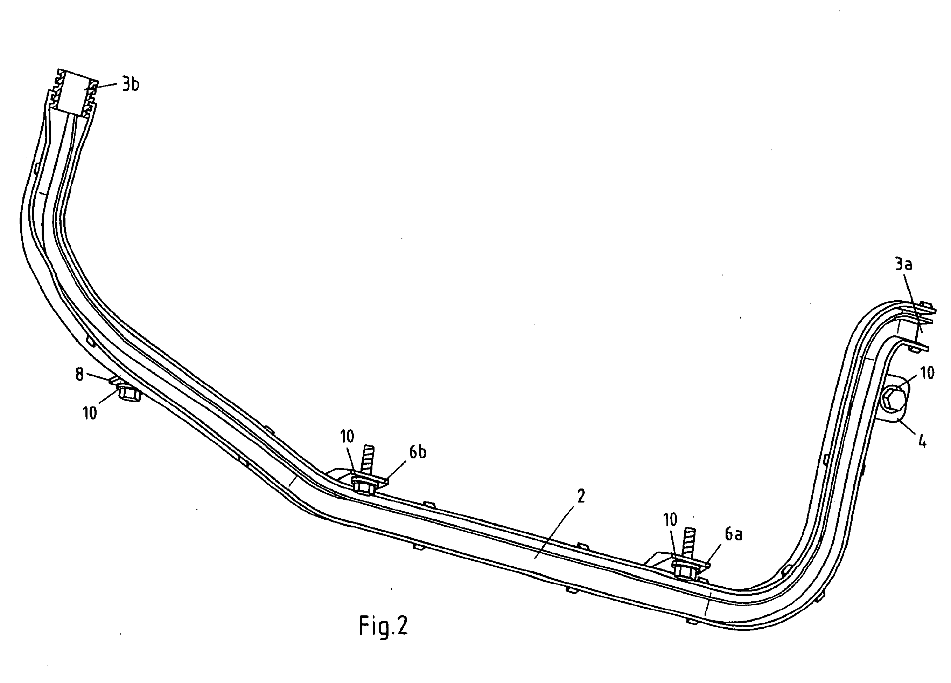

Figur 2 zeigt eine ähnliche Draufsicht auf den Kabelschacht 2 wie die in Figur 1 dargestellte, jedoch fehlt hier das Verschlusselement. Zu erkennen ist, dass der Kabelschacht 2 ein doppeltes U-Profil aufweist. In diesem doppelten U-Profil können die Kabel eingelegt werden. Dadurch lässt sich der Kabelschacht 2 mit den erforderlichen Kabeln vorkonfektionieren. In jedem der Schächte können Kabel so verlegt werden, dass sie durch die Schachtwände voneinander getrennt sind.

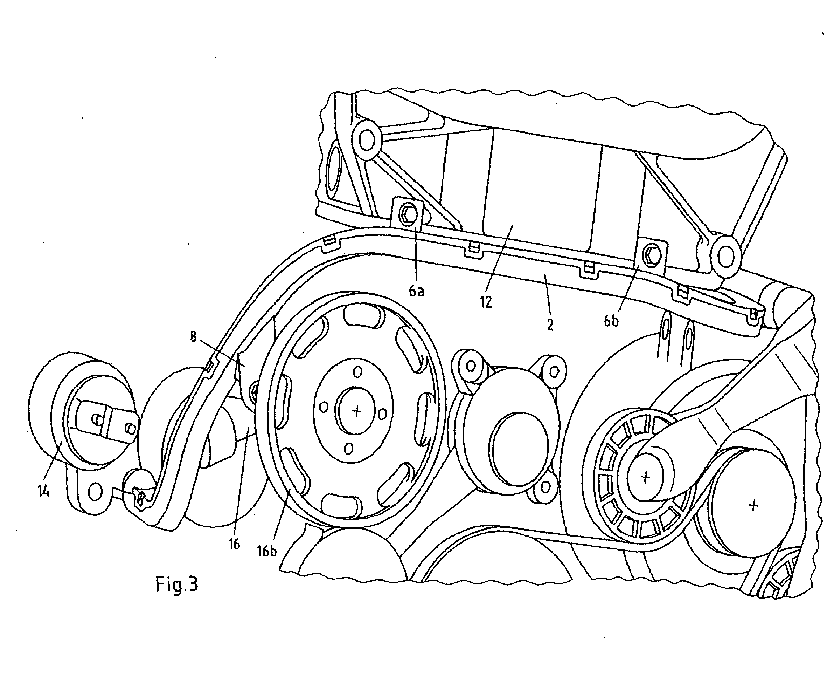

Figur 3 zeigt eine Ansicht eines Innenraums eines Motorraums. Zu erkennen ist der Kabelschacht 2 mit seinen Befestigungsbuchsen 6 und 8. Ferner ist zu erkennen ein Zylinderkopf 12, ein Anlasser 14 und eine Wasserpumpe 16 mit einem Antriebsrad 16b.

Wie aus der Figur 3 zu erkennen ist, verläuft der Kabelschacht 2 parallel zum Zylinderkopf 12 und ist daran über die Befestigungsbuchsen 6 befestigt. Am Ende des Zylinderkopfes 12 ist der Kabelschacht 2 entlang der Wasserpumpe 16 und der Antriebsrades 16b in Richtung des Anlassers 14 nach unten gebogen. Kurz vor dem Anlasser 14 ist der Kabelschacht 2 ein weiteres Mal um ca. 90° in Richtung der Anlassers 14 gebogen und ermöglicht so den Auslass des Kabels in Richtung des Anlassers 14.

Um den Kabelschacht 2 möglichst fest im Motorraum anzuordnen, ist dieser mit Hilfe der Befestigungsbuchse 8 an der Wasserpumpe 16 befestigt. Durch die gezeigte Anordnung muss der Kabelschacht 2 nur an drei bzw. vier Punkten fixiert werden, wonach die Verlegung des Kabels beendet ist. Dies reduziert die Verlegungskosten erheblich.

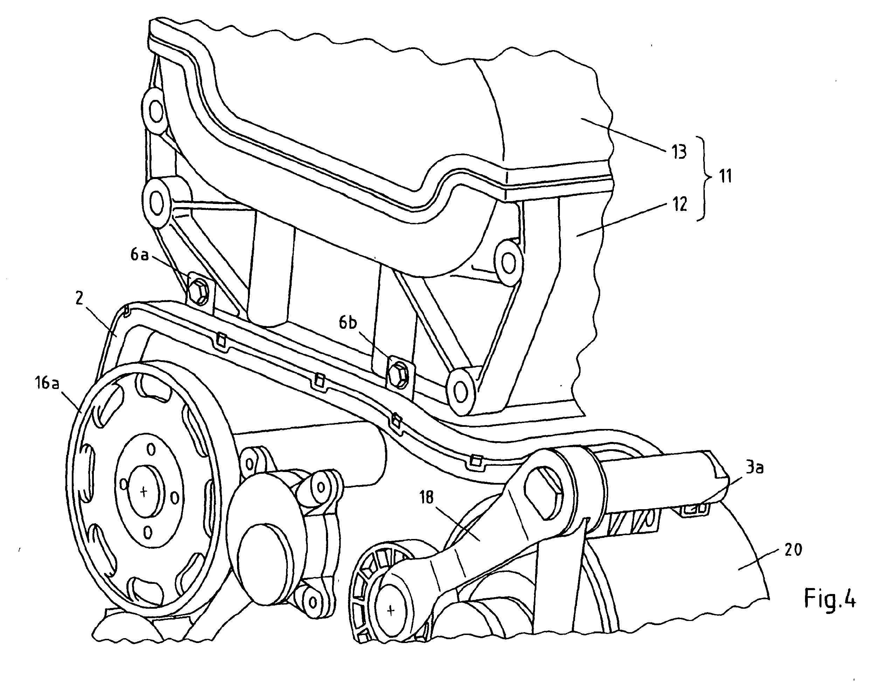

In Figur 4 ist eine weitere Ansicht des Motorraums aus einer anderen Perspektive dargestellt. Neben den in Figur 3 gezeigten Elementen des Motorraums zeigt Figur 4 zusätzlich einen Ventildeckel 13, einen Spannhebel eines Riemenspanners 18 und einen Generator 20. Wie aus der Figur 4 zu erkennen ist, verläuft der Kabelschacht 2 zwischen Riemenspanner 18 und Wasserpumpe 16 parallel zum Zylinderkopf 12 . In Richtung des Generators 20 ist der Kabelschacht 12 vor dem Spannhebel des Riemenspanners 18 abgeknickt und verläuft zwischen Triebwerk 11 und Befestigung des Spannhebels für den Riemenspanner 18. Unterhalb der Befestigung des Spannhebels für den Riemenspanner 18 knickt der Kabelschacht 2 dann ab in Richtung des Generators 20 und gibt dort das Kabel frei. Der Kabelschacht 2 ist zusätzlich am Spannhebel des Riemenspanners 18 befestigt. Dies ist aus der gezeigten Ansicht nicht zu erkennen.

Die erfindungsgemäße Anordnung des Kabelstrangs im Kabelschacht ermöglicht das vorkonfektionieren der Kabel und ein einfaches und kostengünstiges Anbringen der Kabel im Motorraum. Ein Fädeln der Kabel ist nicht mehr notwendig.

### Bezugszeichenliste

- 2: Kabelschacht
- 3: Austrittsöffnung
- 4, 6, 8: Befestigungsbuchse
- 10: Unterlegscheiben
- 11: Triebwerk
- 12: Zylinderkopf
- 13: Ventildeckel
- 14: Anlasser
- 16: Wasserpumpe
- 16b: Antriebsrad
- 18: Spannhebel
- 20: Generator

## Patentansprüche

1. Kabelführung für Kabel in Verbrennungsmotoren, mit einem einen Generator (20) mit einem Anlasser (14) verbindenden Kabel, wobei das Kabel durch die Kabelführung vom Generator (20) seitlich entlang eines ein Kurbelgehäuse und/oder einen Zylinderkopf (12) aufweisenden Triebwerks (11) zumindest teilweise zum Anlasser (14) geführt ist,
**dadurch gekennzeichnet,**
**dass** die Kabelführung als ein im Wesentlichen formstabiler Kabelschacht (2) gebildet ist.

2. Kabelführung nach Anspruch 1,
**dadurch gekennzeichnet,**
**dass** der Kabelschacht (2) zumindest zwei am seitlichen Kurbelgehäuse und/oder Zylinderkopf (12) und/oder Ventildeckel (13) angeordnete, den Kabelschacht (2) am Kurbelgehäuse und/oder Zylinderkopf (12) und/oder Ventildeckel (13) fixierende Befestigungsbuchsen (6) aufweist.

3. Kabelführung nach Anspruch 1 oder 2,
**dadurch gekennzeichnet,**
**dass** der Kabelschacht (2) eine an einem Spannhebel (18) eines Riemenspanners angeordnete, den Kabelschacht (2) am Spannhebel (18) des Riemenspanners fixierende Befestigungsbuchse (4) - aufweist.

4. Kabelführung nach einem der Ansprüche 1 bis 3,
**dadurch gekennzeichnet,**
**dass** der Kabelschacht (2) eine an einer Wasserpumpe (16) angeordnete, den Kabelschacht (2) an der Wasserpumpe (16) fixierende Befestigungsbuchse (8) aufweist.

5. Kabelführung nach einem der Ansprüche 2 bis 4,
**dadurch gekennzeichnet,**
**dass** die Befestigungsbuchsen (4, 6, 8) als Befestigungsclips und/oder als Bohrungen gebildet sind.

6. Kabelführung nach einem der Ansprüche 2 bis 5,
**dadurch gekennzeichnet,**
**dass** die Befestigungsbuchsen (4, 6, 8) zumindest teilweise aus Bronze gebildet sind.

7. Kabelführung nach einem der Ansprüche 1 bis 6,
**dadurch gekennzeichnet,**
**dass** der Kabelschacht (2) als Spritzgussteil geformt ist.

8. Kabelführung nach einem der Ansprüche 1 bis 7,
**dadurch gekennzeichnet,**
**dass** der Kabelschacht (2) eine erhöhte Temperaturfestigkeit aufweist.

9. Kabelführung nach einem der Ansprüche 1 bis 8,
**dadurch gekennzeichnet,**
**dass** ein Klimakompressoranschlusskabel, ein Klemme 50 Kabel und/oder eine BSD Steuerleitung für den Generator (10) im Kabelschacht (2) geführt sind.

10. Kabelführung nach einem der Ansprüche 1 bis 9,
**dadurch gekennzeichnet,**
**dass** der Kabelschacht (2) ein U-Profil zur Aufnahme der Kabel aufweist und dass der Kabelschacht (2) durch ein Verschlusselement verschließbar ist.

11. Kabelführung nach einem der Anschlüsse 1 bis 10,
**dadurch gekennzeichnet,**
**dass** zumindest eine Austrittöffnung (3a, b) des Kabelschachts (2) eine zur Aufnahme eines Wellrohres gebildete Passform aufweist.

12. Verfahren zur Herstellung einer Kabelführung für Kabel in Verbrennungsmotoren, bei welchem ein einen Generator mit einem Anlasser verbindendes und vom Generator seitlich entlang eines ein Kurbelgehäuse und/oder einen Zylinderkopf aufweisenden Triebwerks zumindest teilweise zum Anlasser geführtes Kabel in einem im Wesentlichen formstabilen Kabelschacht konfektioniert wird und bei welchem der konfektionierte Kabelschacht am Kurbelgehäuse und/oder am Zylinderkopf und/oder am Ventildeckel befestigt wird.

## Claims

1. Cable conduit for cables in combustion engines, with a cable connecting a generator (20) to a starter (14), wherein the cable is fed through the cable conduit from the generator (20) along the side of a driving gear (11) having a crankcase and/or a cylinder head (12) at least partly to the starter (14), **characterised in that** the cable conduit is formed as an essentially inherently stable cable duct (2).

2. Cable conduit according to Claim 1, **characterised in that** the cable duct (2) has at least two mounting bushings (6) arranged on the lateral crankcase and/or cylinder head (12) and/or valve bonnet (13) and fastening the cable duct (2) to the crankcase and/or cylinder head (12) and/or valve bonnet (13).

3. Cable conduit according to Claim 1 or 2, **characterised in that** the cable duct (2) has a mounting bushing (4) arranged on a tension lever (18) of a belt tensioner and fastening the cable duct (2) to the tension lever (18) of the belt tensioner.

4. Cable conduit according to any one of Claims 1 to 3, **characterised in that** the cable duct (2) has a mounting bushing (8) arranged on a water pump (16) and fastening the cable duct (2) to the water pump (16).

5. Cable conduit according to any one of Claims 2 to 4, **characterised in that** the mounting bushings (4, 6, 8) are formed as mounting clips and/or as bores.

6. Cable conduit according to any one of Claims 2 to 5, **characterised in that** the mounting bushings (4, 6, 8) are at least partly made of bronze.

7. Cable conduit according to any one of Claims 1 to 6, **characterised in that** the cable duct (2) is moulded as an injection moulded part.

8. Cable conduit according to any one of Claims 1 to 7, **characterised in that** the cable duct (2) has increased temperature stability.

9. Cable conduit according to any one of Claims 1 to 8, **characterised in that** an air-conditioning compressor connecting cable, a clamp 50 cable and/or a BSD control line for the generator (10) are fed into the cable duct (2).

10. Cable conduit according to any one of Claims 1 to 9, **characterised in that** the cable duct (2) has a U-profile to accommodate the cables, and **in that** the cable duct (2) can be sealed by a sealing element.

11. Cable conduit according to any one of Claims 1 to 10, **characterised in that** at least one outlet (3a, b) of the cable duct (2) is shaped as a perfect fit for accommodating a corrugated tube.

12. Method for manufacturing a cable conduit for cables in combustion engines, in which a cable connecting a generator to a starter and fed from the generator along the side of a driving gear having a crankcase and/or a cylinder head at least partly to the starter, is fitted in an essentially inherently stable cable duct, and in which the tailored cable duct is mounted on the crankcase and/or on the cylinder head and/or on the valve bonnet.

## Revendications

1. Conduite pour câbles dans des moteurs à combustion interne, avec un câble, qui relie un générateur (20) à un démarreur (14), le câble étant conduit, au moins partiellement, dans la conduite de câbles, du générateur (20) au démarreur (14), latéralement, le long d'un mécanisme (11), qui présente un carter de vilebrequin et / ou une culasse (12), **caractérisée en ce que** la conduite pour câbles est réalisée sous la forme d'un puits à câbles, sensiblement indéformable.

2. Conduite pour câbles selon la revendication 1, **caractérisée en ce que** le puits à câble (2) présente au moins deux douilles de fixation (6), agencées sur le carter de vilebrequin latéral et / ou sur la culasse (12) et / ou sur le chapeau de la soupape (13), lesquelles douilles fixent le puits à câbles (2) au carter de vilebrequin latéral et / ou à la culasse (12) et / ou au chapeau de la soupape (13).

3. Conduite pour câbles selon revendication 1 ou 2, **caractérisée en ce que** le puits à câbles (2) présente une douille de fixation (4), agencée sur un levier de serrage (18) d'un tendeur de courroie, laquelle douille fixe le puits à câbles (2) du levier de serrage (18) d'un tendeur de courroie.

4. Conduite pour câbles selon l'une des revendications 1 à 3, **caractérisée en ce que** le puits à câbles (2) présente une douille de fixation (8), agencée sur une pompe à eau (16), laquelle douille fixe le puits à câbles (2) à la pompe à eau (16).

5. Conduite pour câbles selon l'une des revendications 2 à 4, **caractérisée en ce que** les douilles de fixation (4, 6, 8) sont réalisées sous la forme de clips de fixation et / ou d'alésage.

6. Conduite pour câbles selon l'une des revendications 2 à 5, **caractérisée en ce que** les douilles de fixation (4, 6, 8) sont exécutées, au moins partiellement, en bronze.

7. Conduite pour câbles selon l'une des revendications 1 à 6, **caractérisée en ce que** le puits à câbles (2) est réalisé en tant que pièce moulée par injection.

8. Conduite pour câbles selon l'une des revendications 1 à 7, **caractérisée en ce que** le puits à câbles (2) présente une résistance thermique surélevée.

9. Conduite pour câbles selon l'une des revendications 1 à 8, **caractérisée en ce qu'**un câble de raccordement d'un compresseur de conditionnement d'air, un câble de borne 50 et / ou un câble BSD pour le générateur (29) sont conduits dans le puits à câbles (2).

10. Conduite pour câbles selon l'une des revendications 1 à 9, **caractérisée en ce que** le puits à câbles (2) présente un profilé en U pour la réception des câbles, et que le puits à câbles (2) peut être fermé par un élément de fermeture.

11. Conduite pour câbles selon l'une des revendications 1 à 10, **caractérisée en ce qu'**au moins une ouverture de sortie (3a, b) du puits à câbles (2) présente une forme adaptée à la réception d'un tube ondulé.

12. Procédé pour la réalisation d'une conduite pour câbles dans des moteurs à combustion interne, dans lequel un câble, qui relie un générateur à un démarreur, et qui est conduit, au moins partiellement, du générateur au démarreur, latéralement, le long d'un mécanisme, qui présente un carter de vilebrequin et / ou une culasse, est confectionné dans un puits à câbles, sensiblement indéformable, et dans lequel le puits à câbles confectionné est fixé au carter de vilebrequin et / ou à la culasse et / ou au chapeau de soupape.
